# EUROPÄISCHE PATENTSCHRIFT

(11) **EP 2 335 998 B1**
(45) Veröffentlichungstag und Bekanntmachung des Hinweises auf die Patenterteilung: **23.03.2016**
(21) Anmeldenummer: 10194296.9
(22) Anmeldetag: 09.12.2010
(51) Int. Cl.: B62B 3/14, B62B 3/18

(54) **Faltbare Getränkekistenablage für einen Einkaufswagen**
Collapsible drink crate storage for a shopping trolley
Dépôt de caisse à boissons pliable pour un chariot de supermarché

(30) Priorität: 16.12.2009 DE 202009017023 U
(43) Veröffentlichungstag der Anmeldung: 22.06.2011
(73) Patentinhaber: J.D. Geck GmbH, 58752 Altena (DE)
(72) Erfinder: Kroker, Thomas, 58513, Lüdenscheid (DE)
(74) Vertreter: Tarvenkorn, Oliver

(56) Entgegenhaltungen:
- WO-A2-2005/030556
- CA-A1- 2 249 789
- DE-A1- 3 415 392
- NL-C1- 1 008 333

## Beschreibung

Die Erfindung betrifft eine faltbare Getränkekistenablage für einen Einkaufswagen, der ein Untergestell und einen damit verbundenen Drahtkorb umfasst, wobei die Getränkekistenablage zwei gelenkig miteinander verbundene Teilelemente umfasst, die formschlüssig miteinander gekoppelt sind und gelenkig an dem Einkaufswagen anzubinden sind und wobei das vordere Teilelement der Getränkekistenablage zwei vertikal angestellte und parallel zueinander ausgerichtete, U-förmige Drahtschlaufen aufweist, die jeweils eine Führungsbahn ausbilden, in welchem das hintere Teilelement beweglich geführt ist.

Bei Einkaufswagen ist es bekannt, im rückwärtigen Bereich eine Getränkekistenablage vorzusehen, die im Normalfall weggeklappt bzw. eingefaltet ist, damit sie den Benutzer beim Schieben nicht behindert und zugleich das Ineinanderschieben der Einkaufswagen ermöglicht ist. Wird die Getränkekistenablage ausgeklappt, kann der Benutzer bequem eine Getränkekiste darauf stellen, ohne diese über die oftmals weit hochgezogene Oberkante des Drahtkorbs heben zu müssen.

Dazu werden herkömmlicherweise, beispielsweise bei dem in DE 34 15 392 A1 offenbarten Einkaufswagen, wenigstens zwei aus einem starken Stahldraht hergestellte Teileelemente gelenkig miteinander verbunden. Diese sind gelenkig an den Korb des Einkaufswagens bzw. an das Untergestellt des Einkaufswagens angebunden sind. Der Nachteil der bekannten Getränkekistenablage besteht darin, dass der Korrosionsschutz des Stahldrahts, bei dem es sich um eine Zinkschicht oder insbesondere um eine galvanisierte Schicht handelt, an der Gelenkverbindung zwischen den Teilelementen unvollständig ist. Werden die Einzelteile bereits vor dem Herstellen der Verbindung mit der Korrosionsschutzschicht versehen, so muss diese partiell im Bereich der vorgesehenen Gelenkverbindung wieder zerstört werden, wenn die Teile miteinander verbunden werden. Werden die Teile hingegen vor der Durchführung der Korrosionsschutzmaßnahmen miteinander verbunden, dann verbleiben im Kontaktbereich ungeschützte Stellen.

Aufgabe der Erfindung ist es daher, eine Getränkekistenablage für einen Einkaufswagen anzugeben, der eine lückenlose Korrosionsschutzbeschichtung ohne Nachbehandlung ermöglicht.

Erfindungsgemäß wird diese Aufgabe durch eine faltbare Getränkekistenablage mit den Merkmalen des Anspruchs 1 erreicht.

Erfindungswesentlich ist dabei die Form der Führungsbahn, die insbesondere an dem vorderen, mit dem Einkaufswagenkorb zu verbindenden Teil angeordnet ist:
Die Buchten, die sich an die Führungsbahnen anschließen, liegen in einer Ebene, die senkrecht zu den beiden Ebenen ist, welche jeweils durch die parallelen Drahtbügel an der Führungsbahn laufen. In einer Draufsicht von oben auf den Einkaufswagen gesehen bilden die beiden Buchten, die am Anfang der Führungsbahn angeordnet sind, somit eine Einfädelstelle in die jeweilige Führungsbahn.

Die offene Seite der Führungsbahnen weist bei dem an einem Einkaufswagen montierten Getränkekistenhalter vorzugsweise nach vorn, so dass entsprechend die Buchten in Fahrtrichtung vor den Führungsbahnen liegen. Auch die umgekehrte Anordnung ist möglich.

An dem anderen Teilelement des Getränkekistenhalters sind zwei parallele L-förmige Bügelstücke vorhanden. Diese besitzen endseitig jeweils sogenannte Bügelfortsätze, also kurze umgebogene Enden, die vorzugsweise nach innen weisen, also aufeinander zu. Mit diesen umgebogenen Enden wird das hintere Teilelement des Getränkekistenhalters einfach von oben an dem durch die Buchten gebildeten Rücksprung am vorderen Teilelement positioniert und dadurch in die Führungsbahnen eingefädelt.

Diese einfache Steckverbindung ermöglicht, dass beide Teile der Getränkekistenablage zunächst einzeln hergestellt und mit einem Korrosionsschutzüberzug versehen werden können, der somit lückenlos aufgebracht werden kann.

Es sei klargestellt, dass die Bezeichnungen "waagerecht", "senkrecht" und "vertikal" die grobe räumliche Ausrichtung bei normalem Gebrauch der Getränkekistenablage an einem Einkaufswagen betreffen. Kleine Winkelabweichungen gegenüber der streng geometrischen Definition beeinträchtigen die erfindungsgemäße Funktion nicht.

"U-förmig" bedeutet im Sinne der vorliegenden Erfindung nur, dass zwei im Wesentlichen parallele Schenkel gegeben sind und dazwischen ein Knick oder ein verbindender Steg angeordnet ist. Letzter kann sowohl spitz, wie auch eckig oder gerundet sein.

Es ist möglich, dass die Bügelfortsätze und die Buchten nach außen weisen, also jeweils voneinander weg.

Bevorzugt weisen die Bügelfortsätze und die Buchten jedoch eben nach innen, also jeweils aufeinander zu. Dies hat den Vorteil, dass es keine nach außen vorstehenden Teile gibt, an denen am Einkaufswagen hängende Taschen oder die Bekleidung des Kunden hängen bleiben könnten.

Das vordere Teilelement kann aus einem einzigen Stahldraht gebildet sein, dessen Enden jeweils zu einem Haken umgebogen sind. Über die Haken kann das vordere Teilelement einfach am Einkaufswagen eingehängt werden.

Gemäß einer bevorzugten Ausführungsform ist vorgesehen, dass die Buchten und einer der Schenkel der U-förmigen Führungsbahn in einer gemeinsamen ersten Ebene liegen und die anderen Schenkel der U-förmigen Führungsbahn zusammen mit einem Verbindungsbügel in einer gemeinsamen zweiten Ebene liegen. Weil dabei die Buchten zum Einfädeln oben liegen, kann die Montage des hinteren Teilelements am vorderen Teilelement bequem von oben erfolgen. Das erleichtert das Einhängen des hinteren Teilelements insbesondere dann, wenn das vordere Teilelement schon am Einkaufswagen montiert ist.

Jedoch ist auch die umgekehrte Ausbildung möglich, bei der die Buchten und einer der Schenkel der U-förmigen Führungsbahn in einer oberen Ebene liegen und die anderen Schenkel der U-förmigen Führungsbahn zusammen mit einem Verbindungsbügel in einer unteren zweiten Ebene liegen.

Die erfindungsgemäße Getränkekistenablage eignet sich für einen nachträglichen Austausch bestehender Getränkeablagen im Reparaturfall.

Gegenstand der vorliegenden Erfindung ist aber auch ein vollständiger Einkaufswagen mit den Merkmalen des Anspruchs 7, der vorn vornherein mit einer erfindungsgemäßen Getränkekistenablage ausgerüstet ist.

Hierbei können in vorteilhafter Weise die geometrischen Verhältnisse derart abgestimmt werden, dass ein unbeabsichtigtes Lösung der gelenkigen Verbindung der beiden Teilelemente im Bereich der Führungsbahn vermieden wird.

Dazu wird der Weg, den die Bügelfortsätze innerhalb der Führungsbahnen zurücklegen können, begrenzt. Dies wird dadurch erreicht, dass - in der Seitenansicht gesehen - die Kreisbahnen, auf der die Enden der Bügelfortsätze in Bezug auf ihre am Untergestell des Einkaufswagens positionierte Schwenkachse laufen, niemals diejenigen Kreisbahnen schneiden, welche die Buchten am Anfang der jeweiligen Führungsbahn beim Schwenken um die Schwenkachse vorn am Einkaufswagen beschreiben.

Somit kann das hintere Teilelement der Getränkekistenablage im angeschraubten Zustand niemals aus der Führungsbahn herausgehoben werden, ganz gleich, welche Stellung die beiden Teile der Getränkekistenablage zueinander annehmen. Ist die Getränkekistenablage eingeklappt, dann stehen die Bügelfortsätze in einem mittleren Bereich der Führungsbahn, oder auch in einem etwas vorderen Bereich der Führungsbahn; sie gelangen jedoch nicht in den Bereich der Buchten hinein und können deshalb nicht unbeabsichtigt ausgefädelt werden.

Die Kreisbahn der Bügelfortsätze schneidet hingegen die Kreisbahn eines Punktes am Ende der Führungsbahn zweimal, nämlich einmal in der gestreckten Gebrauchslage der Getränkekistenablage und zudem im eingeklappten Zustand. In diesen Positionen liegen die Bügelfortsätze also im Endbereich der jeweiligen Führungsbahn.

Wird die Getränkekistenablage benutzt, so wird hinten am Bügel gezogen. Die Bügelfortsätze können innerhalb der Führungsbahn nach hinten gleiten, bis sie am Ende der U-förmigen Führungsbahn festhängen.

Die Anbindung des hinteren Teils an das Untergestell des Einkaufswagens erfolgt derart, dass diejenigen Bügel, mit denen das hintere Teil an die Lagerachsen angebunden ist, nach hinten weisen, und zwar in einem Winkel von deutlich weniger als 90° in Bezug auf eine gedachte vertikale Linie. Bei einer auf die ausgeklappte Ablage aufgesetzten Getränkekiste führt dies dazu, dass die Verbindung zwischen den beiden Teilelementen der faltbaren Getränkekistenablage auf Zug beansprucht wird.

Beim Einklappen werden die Fortsätze zunächst innerhalb der Führungsbahn ein Stück nach vorn geschoben. Anschließend schwenkt jedoch das vordere Teilelement aufgrund der Zwangskopplung nach unten weg. Dadurch können die Bügelfortsätze den offenen Bereich der U-förmigen Führungsbahn nicht verlassen.

Vorzugsweise weisen die beiden Buchten nach innen, also aufeinander zu. Das jeweils andere Ende der Führungsbahn läuft in einem weiten Bogen nach außen und vereinigt sich dann mit dem bogenförmigen Abschnitt des anderen Drahtabschnitts, der die Führungsbahn mit ausbildet.

Die Erfindung wird nachfolgend anhand eines Ausführungsbeispiels eines mit der Getränkekistenablage versehenen Einkaufswagens und mit Bezug auf die Zeichnung näher erläutert. Die Figuren zeigen im Einzelnen:
- Fig. 1: einen Einkaufswagen mit ausgeklappter Getränkekistenablage in perspektivischer Ansicht;
- Fig. 2: die Getränkekistenablage gemäß Fig. 1 im Detail;
- Fig. 3: die eingeklappte Getränkekistenablage gemäß Fig. 1 im Detail;
- Fig. 4: die Getränkekistenablage während des Einklappens im Detail;
- Fig. 5: die Führungsbahn an der Getränkekistenablage gemäß Fig. 4 in Vergrößerung;
- Fig. 6a-6c: die Kinematik der Getränkekistenablage in verschiedenen Bewegungsstadien, jeweils in stark schematisierter, seitlicher Ansicht; und
- Fig. 7: das Einfädeln eines hinteren Teilelements an einem vorderen Teilelement in perspektivischer Ansicht.

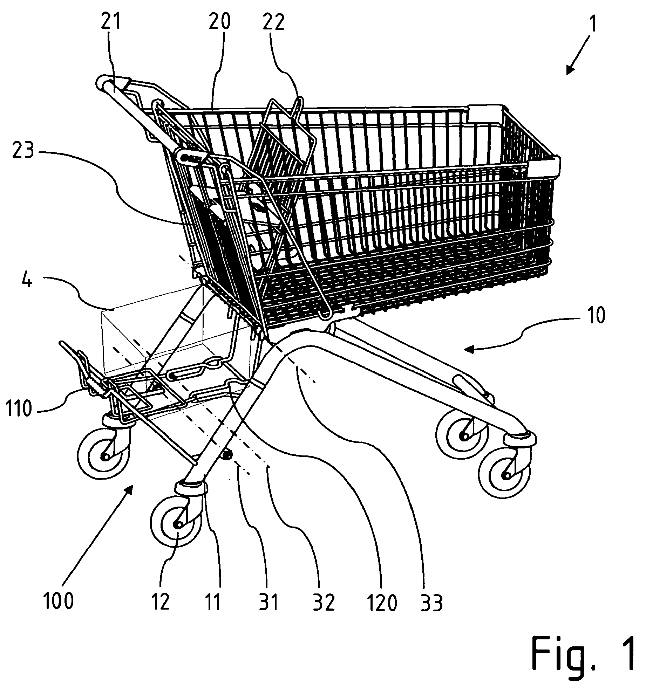

Fig. 1 zeigt einen Einkaufswagen 1 von schräg hinten. Ein Untergestell 10 umfasst in diesem Ausführungsbeispiel vier Beine 11, die an ihrem Ende jeweils eine Laufrolle 12 aufweisen und die paarweise nach vorn oder hinten abgespreizt sind.

Darauf aufgesetzt ist ein Drahtkorb 20, der im dargestellten Ausführungsbeispiel in an sich bekannter Weise mit einem Schiebebügel 21, einem ausklappbaren Kleinkindersitz 22 und einer schwenkbaren Heckklappe 23 ausgestattet ist.

Zwischen den hinteren Beinen 11 des Einkaufswagens 1 ist eine faltbare Getränkekistenablage 100 angebracht, die aus zwei gelenkig miteinander verbundenen Teilelementen 110, 120 besteht. Die Getränkekistenablage 100 ist mit ihrem hinteren Teilelement 110 schwenkbar mit den hinteren Beinen 10 des Einkaufswagens 1 verbunden. Mit 31 ist eine hintere, untere Schwenkachse bezeichnet, um die das hintere Teilelement 110 bewegt werden kann.

Das vordere Teilelement 120 ist in eine Aufnahme am Untergestell 10 oder am Drahtkorb 20 eingehängt, so dass es um eine Schwenkachse 33 bewegbar ist.

Die Teilelemente 110, 120 sind auch untereinander gekoppelt. Um eine Achse 32 können die Teilelemente 110, 120 gegeneinander verschwenkt werden.

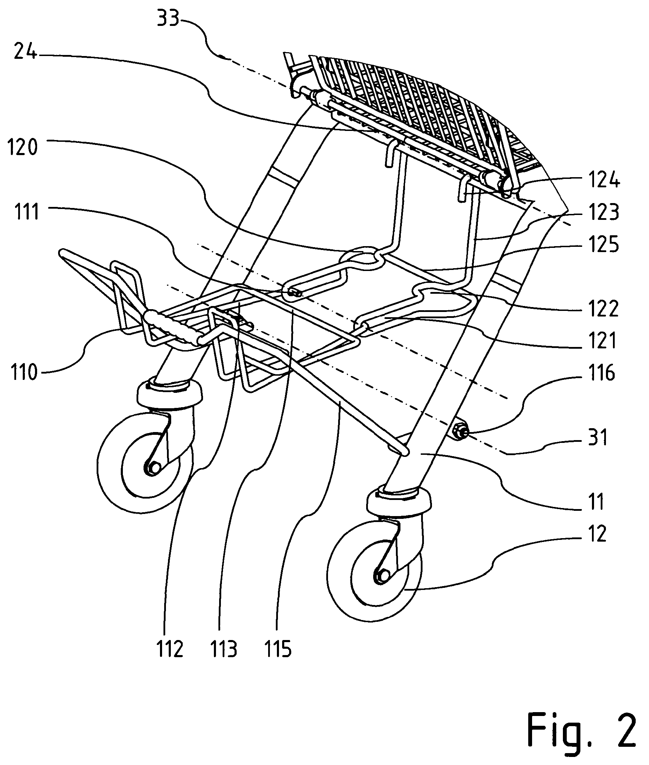

In Fig. 1 ist der Einkaufswagen 1 mit der Getränkekistenablage 100 im ausgeklappten Zustand abgebildet. Ein Detail daraus zeigt Fig. 2, wodurch der Aufbau der Getränkekistenablage 100 genauer erkennbar ist.

Das vordere Teilelement 120 ist aus einem Stahldraht gebildet. Einhängbügel 123 sind endseitig zu Haken 124 umgebogen und ermöglichen das Einhängen des vorderen Teilelements 120 in eine Aufnahme am Einkaufswagen 1, z.B. in eine Lochschiene 24.

In einem Winkel von etwa 100° schließt sich an die Einhängbügel 123 eine obere Ebene an, in der der Draht zunächst eine nach innen gekehrte Bucht 122 beschreibt und dann in den langgestreckten oberen Teil einer Führungsbahn 121 übergeht. Am vorderen Teilelement 120 sind zwei zueinander parallele Führungsbahnen 121 ausgebildet. Jede der Führungsbahnen 121 umfasst einen U-förmigen Abschnitt, der vertikal ausgerichtet ist und in welchem zwei Schenkel mit geringem Abstand zueinander parallel geführt sind.

Mit dem jeweiligen unteren Schenkel der Führungsbahnen 121 beginnt eine untere Ebene am vorderen Teilelement. Beide Seiten sind über einen quer verlaufenden Drahtbügel 125 miteinander verbunden. Die Einhängbügel 123 sind etwa im Bereich des Übergangs der Führungsbahnen in die Buchten 122 in der oberen Ebene an den Drahtbügel 125 in der unteren Ebene angeschweißt, um die Steifigkeit des vorderen Teilelements 120 zu erhöhen.

Das hintere Teilelement 110 besitzt hinten einen starken Bügel 115, der sich von einem Gelenkpunkt 116 am rechten Bein 11 des Einkaufswagens 1 zu einem auf derselben Achse 31 liegenden Gelenkpunkt am linken Bein erstreckt. Er schließt im Gebrauchszustand mit einer Vertikalen einen Winkel von kleiner 90° ein, insbesondere sogar kleiner 45°, so dass durch die Masse eines aufgesetzten Getränkekastens 4 (vgl. Fig. 1) Zugkräfte in der Ebene der Teilelemente 110, 120 ausgeübt werden, durch welche die Getränkekistenablage 100 stabilisiert wird.

Das hintere Teilelement 110 besitzt weiterhin ein Drahtgebilde, das nach vorn in zwei Bügeln 112 ausläuft, deren Enden jeweils umgebogen sind und einen kurzen Bügelfortsatz 111 bilden, welche in die Führungsbahnen 121 des vorderen Teilelements eingreifen.

In dem in Figur 2 dargestellten Gebrauchszustand der Getränkekistenablage 100 liegen die Bügelfortsätze 111 jeweils an den Enden der Führungsbahnen 121 an.

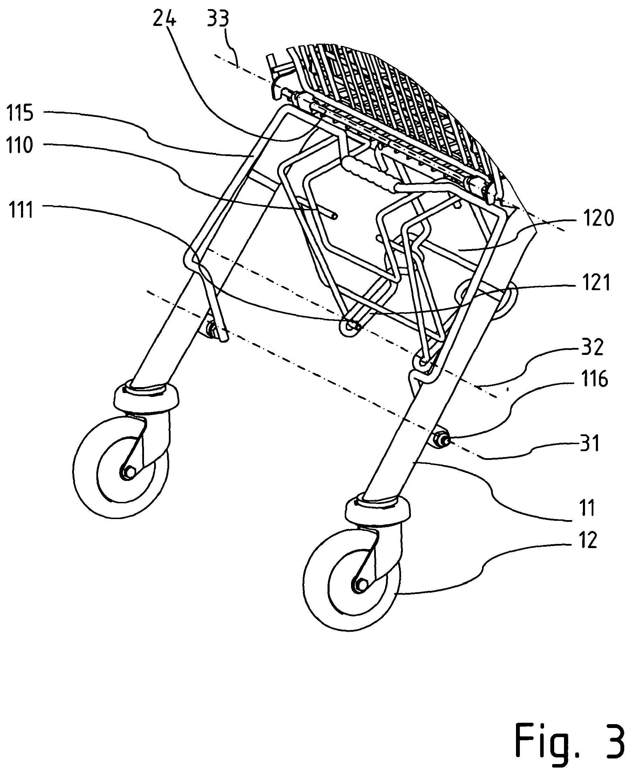

Figur 3 zeigt in einer zu Figur 2 gleichartigen Ansicht die Parkposition des Einkaufswagens 1 mit der zusammen gefalteten Getränkekistenablage 100, die auch ein Ineinanderschieben mehrerer Einkaufswagen 1 ermöglicht. Der hintere Bügel 115 ist maximal nach vorn geschwenkt und liegt in der Nähe der hinteren Beine 11 des Einkaufswagens. Zugleich liegen die Bügelfortsätze 111 wieder im Endbereich der Führungsbahnen 121.

Über die in den Führungsbahnen 121 laufenden Bügelfortsätze 111 wird beim Wegklappen des hinteren Teilelements 110 das vordere Teilelement 120 zwangsgeführt.

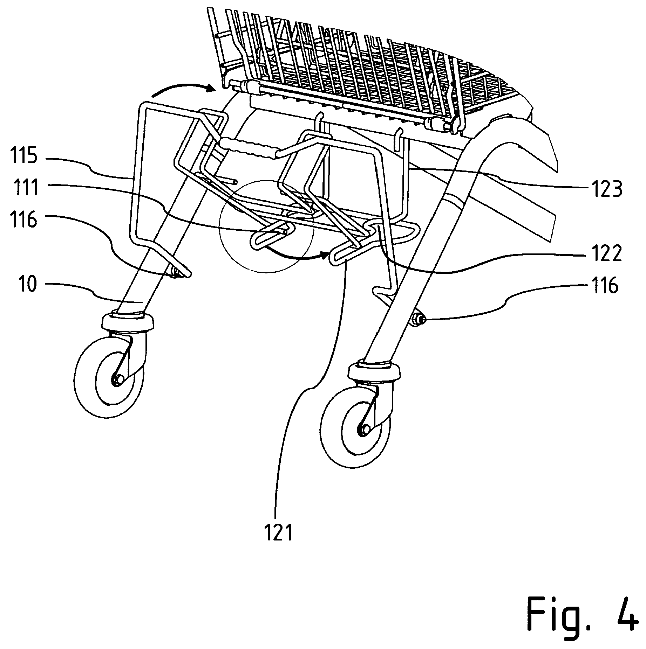

In Figur 4 ist derjenige Zustand dargestellt, in welchem der Wendepunkt der Bügelfortsätze 111 in der Bewegung in der Führungsbahn 121 liegt. Bis zu diesem Wendepunkt laufen die Bügelfortsätze 111 nach vorn. Da sie dabei aber gleichzeitig das vordere Teilelement 120 nach unten drücken, vollziehen sie beim weiteren Hochschwenken des hinteren Teilelements 110 in Bezug auf die Führungsbahn eine Relativbewegung rückwärts.

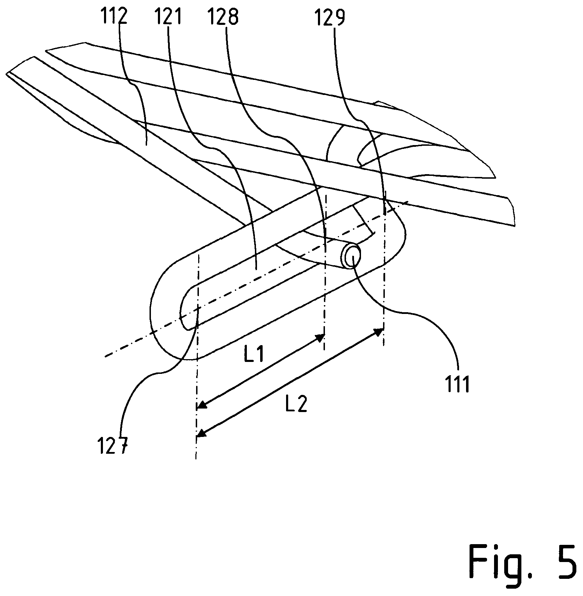

Figur 5 zeigt in nochmaliger Vergrößerung den Bereich der Führungsbahn 121 im Moment der Wendebewegung. Zwischen einem Endpunkt 127 der Führungsbahn 121 und einem Anfangspunkt 129 besteht ein Abstand L2. Die Relativbewegung der Bügelfortsätze 111 beim Gebrauch der Getränkekistenablage erstreckt sich jedoch nur zwischen einem Wendepunkt 128 und dem Endpunkt 127 entsprechend einer Strecke L1. Da L1 deutlich kleiner ist als L2, geraten die Bügelfortsätze 111 niemals aus der Führungsbahn 121 heraus.

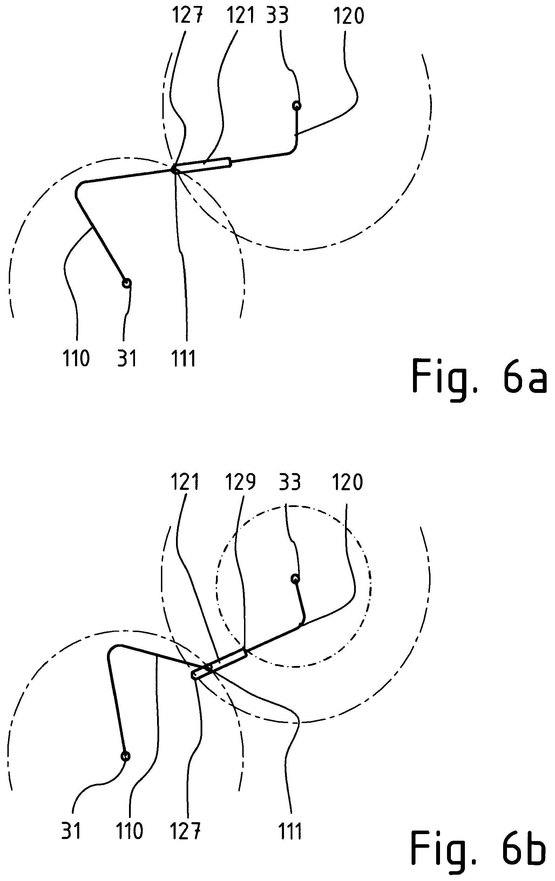

Fig. 6a zeigt in einer stark schematisierten Seitenansicht den Getränkekistenhalter 100 im ausgeklappten Zustand. Beide Teilelemente 110, 120 zusammen bilden im gestreckten Zustand gemäß Fig. 6a eine Ebene, auf die z. B. ein Getränkekasten aufgesetzt werden kann. Im gestreckten Zustand liegen die Bügelfortsätze 111 am Ende der U-fömigen Führungsbahn 121 an; die Verbindung ist auf Zug belastet.

Wie bereits zuvor beschrieben und in Fig. 1 dargestellt, gibt es an dem Getränkekistenhalter 100 drei Gelenkachsen 31, 32, 33:
- Die erste Schwenkachse 31 besteht dort, wo die Stützbügel 122 des hinteren Teilelements 120 gelenkig an die Beine 11 des Einkaufswagens 1 angebunden sind.
- Die zweite Achse 32 wird durch die in die Führungsbahnen 121 des vorderen Teilelements 120 eingehängten Bügelfortsätze 111 des hinteren Teilelements 110 gebildet. Sie kann im Betrieb ihre Lage in Bezug auf ein Untergestell 10 eines Einkaufswagens 1 verändern.
- Die dritte Schwenkachse 33 wird zum Beispiel durch die in den Einkaufswagen 200 eingehängten Enden 124 des vorderen Teilelements 10 gebildet, ist also wiederum fest angeordnet in Bezug auf das Untergestell 10.

Der Kreisbogen links in den Fig. 6a bis Fig. 6c kennzeichnet jeweils die Bewegung der Bügelfortsätze 111 im Raum, wenn das hintere Teilelement 110 um die erste Achse 31 nach vorn geschwenkt wird.

Der Kreisbogen rechts kennzeichnet die Bewegung des äußeren Endpunktes 127 (vgl. Fig. 5) der Führungsbahn 121.

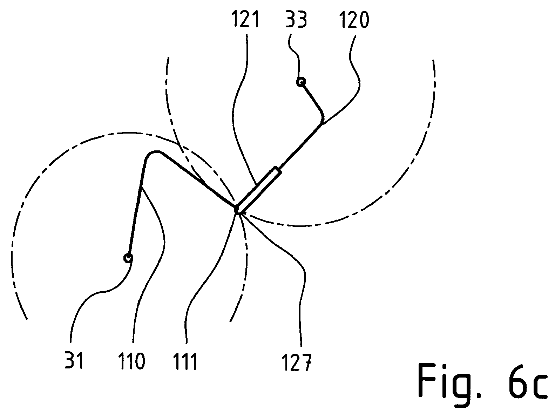

Im gestreckten Zustand des Getränkekistenhalters 100 gemäß Fig. 6a schneiden sich die Bahnkurven, ebenso im eingeklappten Zustand gemäß Fig. 6c. Das heißt, dass die Bügelfortsätze 111 in diesen Stellungen in der Endposition 127 in der Führungsbahn 121 liegen.

In der Mittelstellung gemäß Fig. 6b haben die Bügelfortsätze 111 ihre Lage innerhalb der Führungsbahn 121 verändert und sich relativ gesehen darin weiter nach vorn geschoben, ohne jedoch überhaupt in die Nähe des Einfädelungsbereichs an den Bögen 122 zu gelangen.

Anhand der Figur 6b wird folgende Beziehung deutlich: Die Summe
- des Abstands der Bügelfortsätze 111 von der hinteren Schwenkachse 31, gekennzeichnet durch den linken unteren Kreisbogen und
- des Abstands eines Anfangspunkts 129 der Führungsbahn 121 von der vorderen Schwenkachse 31, gekennzeichnet durch die strichpunktierte Kreislinie,
ist vorzugsweise kleiner als der Abstand der Schwenkachsen 31, 33 zueinander, damit ein unbeabsichtigtes Ausfädeln der Teilelemente 110, 120 verhindert wird.

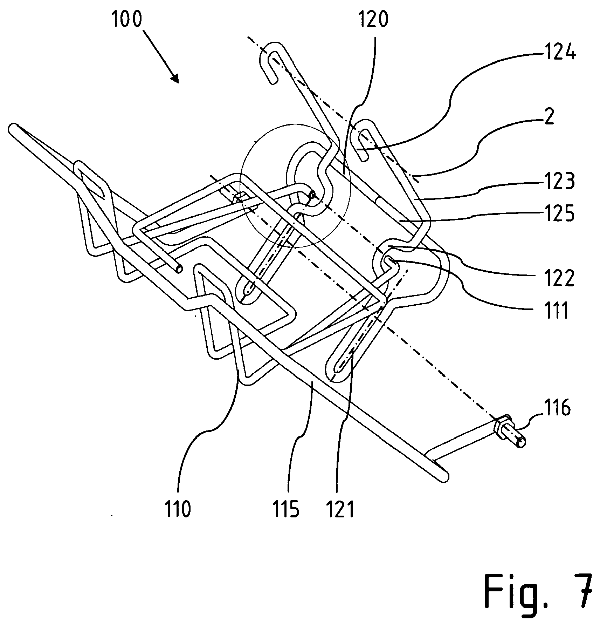

Fig. 7 zeigt die Teilelemente 110, 120 in der Stellung, in welcher Sie miteinander verbunden werden können. Dies ist am Einkaufwagen nur möglich, wenn zwar das vordere Teilelement 120 schon mit seinen Haken 124 eingehängt ist, jedoch die Lagerbolzen 116 des hinteren Teilelements 110 noch nicht am Untergestell 10 montiert sind.

Die Bügelfortsätze 111 liegen genau oberhalb der Buchten 122. Dadurch können sie unter die obere Ebene des vorderen Teilelements abgetaucht werden und nach hinten in die Führungsbahn 121 hinein gezogen werden.

Wie Fig. 7 weiterhin zeigt, ist das Teilelement 120 aus zwei Einzelteilen gebildet, die an dem Drahtbügel 125 stumpf miteinander verschweißt sind

## Patentansprüche

1. Faltbare Getränkekistenablage (100) für einen Einkaufswagen (1), der ein Untergestell (10) und einen damit verbundenen Drahtkorb (20) umfasst, wobei die Getränkekistenablage (100) zwei gelenkig miteinander verbundene Teilelemente (110, 120) umfasst, die formschlüssig miteinander gekoppelt sind und gelenkig an dem Einkaufswagen (1.) anzubinden sind, und wobei das vordere Teilelement (120) der Getränkekistenablage (100) zwei vertikal angestellte und parallel zueinander ausgerichtete, U-förmige Drahtschlaufen aufweist, die jeweils eine Führungsbahn (121) ausbilden, in welchem das hintere Teilelement (110) beweglich geführt ist,
**dadurch gekennzeichnet, dass** das hintere Teilelement (110) über zwei abgewinkelte Bügelfortsätze (111), die auf einer gemeinsamen Mittelachse (32) liegen, an den Führungsbahnen (121) geführt ist und dass das vordere Teilelement eingangs der Führungsbahnen (121) jeweils eine Bucht (122) aufweist, wobei die Buchten (122) in einer Ebene liegen, die senkrecht zu den vertikalen Ebenen der Führungsbahnen ist.

2. Getränkekistenablage (100) nach Anspruch 1, **dadurch gekennzeichnet, dass** die Bügelfortsätze (111) und die Buchten (122) nach innen und aufeinander zu weisen.

3. Getränkekistenablage nach Anspruch 1, **dadurch gekennzeichnet, dass** die Bügelfortsätze und die Buchten nach außen und voneinander weg weisen.

4. Getränkekistenablage (100) nach einem der Ansprüche 1 bis 3, **dadurch gekennzeichnet, dass** das vordere Teilelement (120) aus einem Stahldraht gebildet ist, deren Enden zu einem Haken (124) umgebogen sind.

5. Getränkekistenablage (100) nach Anspruch 4, **dadurch gekennzeichnet, dass** die Buchten (122) und einer der Schenkel der U-förmigen Führungsbahn (121) in einer gemeinsamen ersten Ebene liegen und die anderen Schenkel der U-förmigen Führungsbahn (121) zusammen mit einem Verbindungsbügel (125) in einer gemeinsamen zweiten Ebene liegen.

6. Getränkekistenablage (100) nach Anspruch 5, **dadurch gekennzeichnet, dass** die Buchten (122) und einer der Schenkel der U-förmigen Führungsbahn (121) in einer oberen Ebene liegen und die anderen Schenkel der U-förmigen Führungsbahn (121) zusammen mit einem Verbindungsbügel (125) in einer unteren zweiten Ebene liegen.

7. Einkaufswagen (1), wenigstens umfassend
- ein Untergestell (10), welches zwei nach hinten abgespreizte Beine (11) umfasst, die endseitig jeweils mit einer Rolle (12) versehen sind,
- einen mit dem Untergestell (10) verbundenen Drahtkorb (20), und
- eine faltbare Getränkekistenablage (100) nach wenigstens einem der vorhergehenden Ansprüche.

8. Einkaufswagen (1) nach Anspruch 7, **dadurch gekennzeichnet, dass** das hintere Teilelement (110) über zwei parallele Stützbügel (115) über Lagerbolzen (116) an einer hinteren Schwenkachse (31) mit den Beinen (11) des Untergestells (10) verbunden ist und das vordere Teilelement (120) an einer vorderen Schwenkachse (33) gelenkig an das Untergestell (10) und/oder an den Drahtkorb (20) angebunden ist, wobei die Teilelemente (110, 120) untereinander formschlüssig gekoppelt sind.

9. Einkaufswagen (1) nach Anspruch 7 oder 8, **dadurch gekennzeichnet, dass** in einer zu den Schwenkachsen (31, 32, 33) senkrechten, seitlichen Betrachtungsebene die Summe des Abstands der Bügelfortsätze (111) von der hinteren Schwenkachse (31) und des Abstands eines Anfangspunkts (129) der Führungsbahn (121) von der vorderen Schwenkachse (31) kleiner ist als der Abstand der Schwenkachsen (31, 33) zueinander.

10. Einkaufswagen (1) nach einem der Ansprüche 7 bis 9, **dadurch gekennzeichnet, dass** das Untergestell (10) wenigstens zwei nach hinten abgespreizte Beine (11) mit jeweils einer Laufrolle (12) umfasst.

## Claims

1. Collapsible drinks-crate support (100) for a shopping trolley (1) comprising an undercarriage (10) and a wire basket (20) connected thereto, wherein the drinks-crate support (100) comprises two sub-elements (110, 120) which are connected to one another in an articulated manner, are coupled to one another in a form-fitting manner and can be attached to the shopping trolley (1) in an articulated manner, and wherein the front sub-element (120) of the drinks-crate support (100) has two vertically positioned U-shaped wire loops, which are oriented parallel to one another and each form a guide track (121), in which the rear sub-element (110) is guided in a movable manner,
**characterized in that** the rear sub-element (110) is guided on the guide tracks (121) via two angled bracket extensions (111), which are located on a common centre axis (32), and **in that** the front sub-element has an indent (122) at the start of each of the guide tracks (121), wherein the indents (122) are located in a plane which is perpendicular to the vertical planes of the guide tracks.

2. Drinks-crate support (100) according to Claim 1, **characterized in that** the bracket extensions (111) and the indents (122) are oriented inwards and towards one another.

3. Drinks-crate support according to Claim 1, **characterized in that** the bracket extensions and the indents are oriented outwards and away from one another.

4. Drinks-crate support (100) according to one of Claims 1 to 3, **characterized in that** the front sub-element (120) is formed from a steel wire, of which the ends are bent over to form a hook (124).

5. Drinks-crate support (100) according to Claim 4, **characterized in that** the indents (122) and one of the limbs of the U-shaped guide track (121) are located in a common first plane and the other limbs of the U-shaped guide track (121), together with a connecting bracket (125), are located in a common second plane.

6. Drinks-crate support (100) according to Claim 5, **characterized in that** the indents (122) and one of the limbs of the U-shaped guide track (121) are located in an upper plane and the other limbs of the U-shaped guide track (121), together with a connecting bracket (125), are located in a lower, second plane.

7. Shopping trolley (1) at least comprising
- an undercarriage (10), which comprises two rearwardly spread-apart legs (11), each provided with a roller (12) at their ends,
- a wire basket (20), which is connected to the undercarriage (10), and
- a collapsible drinks-crate support (100) according to at least one of the preceding claims.

8. Shopping trolley (1) according to Claim 7, **characterized in that** the rear sub-element (110) is connected to the legs (11) of the undercarriage (10) via two parallel supporting brackets (115), using bearing pins (116), along a rear pivot axis (31), and the front sub-element (120) is attached to the undercarriage (10) and/or to the wire basket (20) in an articulated manner along a front pivot axis (33), wherein the sub-elements (110, 120) are coupled to one another in a form-fitting manner.

9. Shopping trolley (1) according to Claim 7 or 8, **characterized in that**, as seen in a lateral plane perpendicular to the pivot axes (31, 32, 33), the sum of the distance between the bracket extensions (111) and the rear pivot axis (31) and the distance between a starting point (129) of the guide track (121) and a front pivot axis (31) is smaller than the distance between the pivot axes (31, 33).

10. Shopping trolley (1) according to one of Claims 7 to 9, **characterized in that** the undercarriage (10) comprises at least two rearwardly spread-apart legs (11) each with a running roller (12).

## Revendications

1. Dépôt de caisses à boissons pliable (100) pour un chariot de supermarché (1), qui comprend un châssis inférieur (10) et un panier en treillis (20) connecté à celui-ci, le dépôt de caisses à boissons (100) comprenant deux éléments partiels connectés l'un à l'autre de manière articulée (110, 120), lesquels sont accouplés l'un à l'autre par engagement par correspondance de formes et doivent être reliés de manière articulée au chariot de supermarché (1), l'élément partiel avant (120) du dépôt de caisses à boissons (100) présentant deux boucles en treillis en forme de U inclinées verticalement et orientées parallèlement l'une à l'autre, qui constituent à chaque fois une voie de guidage (121) dans laquelle est guidé de manière déplaçable l'élément partiel arrière (110),
**caractérisé en ce que** l'élément partiel arrière (110) est guidé par le biais de deux arceaux saillant coudés (111) qui sont situés sur un axe médian commun (32) sur les voies de guidage (121) et **en ce que** l'élément partiel avant présente à l'entrée des voies de guidage (121) à chaque fois une anse (122), les anses (122) étant situées dans un plan qui est perpendiculaire aux plans verticaux des voies de guidage.

2. Dépôt de caisses à boissons (100) selon la revendication 1, **caractérisé en ce que** les arceaux saillants (111) et les anses (122) sont tournés vers l'intérieur et les uns vers les autres.

3. Dépôt de caisses à boissons selon la revendication 1, **caractérisé en ce que** les arceaux saillants et les anses sont tournés vers l'extérieur et à l'écart les uns des autres.

4. Dépôt de caisses à boissons (100) selon l'une quelconque des revendications 1 à 3, **caractérisé en ce que** l'élément partiel avant (120) est formé d'un treillis d'acier dont les extrémités sont recourbées pour former un crochet (124).

5. Dépôt de caisses à boissons (100) selon la revendication 4, **caractérisé en ce que** les anses (122) et l'une des branches de la voie de guidage en forme de U (121) sont situées dans un premier plan commun et l'autre branche de la voie de guidage en forme de U (121) conjointement avec un arceau de connexion (125) sont situés dans un deuxième plan commun.

6. Dépôt de caisses à boissons (100) selon la revendication 5, **caractérisé en ce que** les anses (122) et l'une des branches de la voie de guidage en forme de U (121) sont situées dans un plan supérieur et l'autre branche de la voie de guidage en forme de U (121) conjointement avec un arceau de connexion (125) sont situés dans un deuxième plan inférieur.

7. Chariot de supermarché (1), comprenant au moins
- un châssis inférieur (10) qui comprend deux pattes écartées vers l'arrière (11), qui sont pourvues du côté de l'extrémité à chaque fois d'un galet (12),
- un panier en treillis (20) connecté au châssis inférieur (10), et
- un dépôt de caisses à boissons pliable (100) selon au moins l'une quelconque des revendications précédentes.

8. Chariot de supermarché (1) selon la revendication 7, **caractérisé en ce que** l'élément partiel arrière (110) est connecté par le biais de deux arceaux de support parallèles (115) par le biais de boulons de palier (116) au niveau d'un axe de pivotement arrière (31) aux pattes (11) du châssis inférieur (10) et l'élément partiel avant (120) est relié au niveau d'un axe de pivotement avant (33) de manière articulée au châssis inférieur (10) et/ou au panier en treillis (20), les éléments partiels (110, 120) étant accouplés l'un à l'autre par engagement par correspondance de formes.

9. Chariot de supermarché (1) selon la revendication 7 ou 8, **caractérisé en ce que** dans un plan d'observation latéral perpendiculaire aux axes de pivotement (31, 32, 33), la somme de la distance des arceaux saillants (111) à l'axe de pivotement arrière (31) et de la distance d'un point de départ (129) de la voie de guidage (121) à l'axe de pivotement avant (31) est inférieure à la distance des axes de pivotement (31, 33) l'un à l'autre.

10. Chariot de supermarché (1) selon l'une quelconque des revendications 7 à 9, **caractérisé en ce que** le châssis inférieur (10) comprend au moins deux pattes écartées vers l'arrière (11) avec à chaque fois un galet de roulement (12).
